# FASCICULE DE BREVET EUROPEEN

(11) **EP 1 588 591 B1**
(45) Date de publication et mention de la délivrance du brevet: **25.10.2006**
(21) Numéro de dépôt: 04705105.7
(22) Date de dépôt: 26.01.2004
(51) Int. Cl.: H05H 1/22, G21B 1/00

(54) **DISPOSITIF D' INJECTION D' UN FLUX DE GAZ SUPERSONIQUE PULSE**
EINRICHTUNG ZUR INJEKTION EINES GEPULSTEN ÜBERSCHALLGASSTROMS
DEVICE FOR INJECTION OF A PULSED SUPERSONIC GAS STREAM

(30) Priorité: 28.01.2003 FR 0300910
(43) Date de publication de la demande: 26.10.2005
(73) Titulaire: COMMISSARIAT A L'ENERGIE ATOMIQUE, 75752 Paris Cédex 15 (FR)
(72) Inventeur: MARTIN, Gilles, F-04300 Dauphin (FR)
(74) Mandataire: Poulin, Gérard
(86) Numéro de dépôt international: PCT/FR2004/050030
(87) Numéro de publication internationale: WO 2004/071138

(56) Documents cités:
- US-A- 4 632 214
- WU YINGXIANG ET AL: "Plasma density control by molecular beam injection in HT-7 tokamak" 1999, NAGOYA, JAPAN, JAPAN SOC. PLASMA SCI. & NUCL. FUSION RES, JAPAN, 1999, pages 393-397, XP0008026789 ISBN: 4-9900586-4-X
- TESTA D ET AL: "The effect of plasma shaping on the damping of low n Alfven eigenmodes in JET tokamak plasmas" NUCL. FUSION (AUSTRIA), NUCLEAR FUSION, IAEA, AUSTRIA, vol. 41, no. 7, juillet 2001 (2001-07), pages 809-812, XP0008026780 ISSN: 0029-5515
- HORIOKA K ET AL: "Supersonic gas injection valve for beam neutralization from Applied-B pulsed ion diodes" APPL. PHYS. LETT. (USA), APPLIED PHYSICS LETTERS, USA, vol. 47, no. 8, 15 octobre 1985 (1985-10-15), pages 792-793, XP002267989 ISSN: 0003-6951
- PATENT ABSTRACTS OF JAPAN vol. 2000, no. 21, 3 août 2001 (2001-08-03) & JP 2001 115657 A (YUAAZU:KK), 24 avril 2001 (2001-04-24)
- NOVAK B ET AL: "A fast acting all-metal gas valve for plasma research" REV. SCI. INSTRUM. (USA), REVIEW OF SCIENTIFIC INSTRUMENTS, USA, vol. 41, no. 3, mars 1970 (1970-03), pages 369-373, XP002267990 ISSN: 0034-6748
- DATABASE INSPEC [Online] THE INSTITUTION OF ELECTRICAL ENGINEERS, STEVENAGE, GB; 26 mai 2002 (2002-05-26), PEGOURIE B ET AL: "Supersonic gas injection on Tore supra" XP0004415049 Database accession no. 7632099 & 15TH INTERNATIONAL CONFERENCE ON PLASMA SURFACE INTERACTIONS IN CONTROLLED FUSION DEVICES, GIFU, JAPAN, 26-31 MAY 2002, vol. 313-316, mars 2003 (2003-03), pages 539-542, XP0002267991 J. Nucl. Mater. (Netherlands), Journal of Nuclear Materials, March 2003, Elsevier, Netherlands ISSN: 0022-3115
- PATENT ABSTRACTS OF JAPAN vol. 1995, no. 11 26 Décembre 1995 & JP 07 218 380 A (ISHIKAWAJIMA HARIMA HEAVY IND CO LTD) 18 Août 1995

## Description

### DOMAINE TECHNIQUE

La présente invention se rapporte de façon générale aux dispositifs d'injection d'un flux de gaz pulsé.

Plus spécifiquement, l'invention concerne un dispositif permettant d'injecter de la matière dans une installation d'étude des plasmas de fusion thermonucléaire.

### ETAT DE LA TECHNIQUE ANTERIEURE

Dans une installation de fusion thermonucléaire, le combustible pouvant être utilisé est par exemple le deutérium et/ou le tritium. Il doit être porté à plusieurs centaines de millions de degrés, tout en restant confiné à cette température pendant la période la plus longue possible. Pour ce faire, les solutions les plus performantes qui ont été envisagées jusqu'à présent se rapportent à l'utilisation de champs magnétiques intenses permettant d'isoler le plasma de fusion, comportant le gaz ionisé à environ 300 millions de degrés Kelvin, des parois de l'enceinte de confinement.

A ce titre, il est noté que la bonne qualité du confinement se transforme en défaut majeur pour le fonctionnement de l'installation. En effet, si le champ magnétique empêche les particules chaudes de quitter le plasma, il empêche également le remplacement du combustible. Cependant, ces risques restent relativement minimes dans la mesure où des échanges entre l'extérieur et le coeur du plasma ont effectivement lieu, en raison de l'existence d'un certain niveau de diffusion créé par différents facteurs tels que l'absence d'un confinement parfait, des turbulences, ou encore des collisions incessantes entre les particules du plasma.

Ainsi, le contrôle de la quantité de matière contenue dans le plasma est donc réalisé par un équilibrage entre le pompage des particules sortant du plasma vers la paroi, et l'injection du combustible frais. A cet égard, il est précisé que le problème spécifique d'alimentation d'une enceinte ultra-vide en gaz léger comme l'hydrogène ou l'hélium, requiert une très bonne étanchéité et un très bon contrôle.

De l'art antérieur, on connaît à ce jour deux solutions distinctes pour réaliser l'injection de matière dans le plasma d'une installation de fusion thermonucléaire.

Une première solution consiste à injecter le combustible sous forme gazeuse, à température ambiante (voir par exemple L. Yao et al. :" Hydrogen cluster-like behaviour during supersonic molecular beam injection on the HL-1M tokamak"- Nuclear Fusion, Vol.41, No 7).

Cette injection de gaz s'effectue de manière générale à l'aide d'une ou plusieurs vannes piézoélectriques, à un débit de l'ordre de 0,1 à 3 Pa.m³/s. Notons à titre indicatif que l'unité de quantité de matière employée et communément utilisée pour les plasmas de fusion, correspond à la quantité de matière contenue dans un mètre cube à une pression de un Pascal, mesurée à la température ambiante de 20°C. Toujours à titre indicatif, cette quantité correspond à 2,7.10²⁰ molécules, et la quantité de particules contenue dans un plasma classique de l'installation « Tore Supra » est d'environ 1 à 2 Pa.m³, renouvelée toutes les secondes à l'aide d'une à trois vannes piézoélectriques.

D'autre part, les vannes utilisées disposent d'un temps de réponse compris entre 5 et 10 ms, tout à fait adapté pour assurer une alimentation contrôlée du plasma (voir par exemple A. Averbach et al.;" Modified pulsed valve for supersonic jet applications" ― Rev. Sci. Instrum. 51(9), Sept. 1980).

Cependant, dans un tel cas, le gaz injecté par ces vannes entre la paroi de l'enceinte et la surface du plasma est ionisé dès qu'il pénètre de quelques centimètres dans ce dernier, pour ensuite être transféré vers le coeur de ce plasma par diffusion. Or, lors de la mise en oeuvre de cette solution, il a été constaté que la matière injectée ressortait relativement rapidement du coeur du plasma, rendant ainsi le phénomène trop peu efficace.

A ce titre, il a également été observé que l'efficacité de cette solution, définie par le rapport entre le nombre de particules atteignant les zones centrales du plasma et le nombre de particules injectées dans la chambre, ne dépassait pas 10 à 20%. Ainsi, bien que les vannes piézoélectriques employées se soient révélées compatibles avec les exigences d'alimentation contrôlée du plasma, l'efficacité de cette première solution reste trop faible pour optimiser la gestion des quantités de gaz utilisées sur l'installation.

Dans d'autres domaines, exemples de soupapes supersoniques sont donnés par JP-A-2001115657 ou encore par JP-A-07218380, qui décrit un dispositif d'injection d'un flux de gaz supersonique, comportant une première chambre à l'intérieur de laquelle le gaz à injecter se trouve sous pression de part et d'autre d'un piston libre, le dispositif comprenant des moyens de mise en mouvement de ce piston libre, connectés à ladite première chambre et susceptibles de provoquer une propulsion du piston libre, ledit dispositif comportant en outre une tuyère supersonique d'éjection du gaz apte à communiquer avec la première chambre par l'intermédiaire d'une ouverture pratiquée dans cette première chambre.

Une seconde solution a alors été proposée dans l'art antérieur. Elle réside dans l'injection du combustible sous forme solide, par l'intermédiaire de techniques cryogéniques. Le deutérium et/ou le tritium sont alors solidifiés à 4°K, afin de former des « glaçons » injectés ensuite dans l'installation à une vitesse de l'ordre de plusieurs centaines de mètres par seconde, à l'aide d'un injecteur pneumatique du type « sarbacane », ou encore à l'aide d'un injecteur centrifuge du type « fronde ».

Ces injecteurs peuvent fonctionner jusqu'à environ 10 Hertz, et les glaçons formés disposent chacun d'une quantité de matière de l'ordre de 0,2 à 0,5 Pa.m³, correspondant à une valeur comprise entre 2 et 5 mm³.

Dans ce type d'injection, la matière pénètre profondément dans le plasma, car les glaçons sont protégés de la forte température régnant dans le coeur de ce plasma par formation d'un nuage de gaz très dense autour de chacun d'entre eux, selon un phénomène de caléfaction. En effet, lorsqu'un glaçon pénètre dans la plasma, la matière s'évapore partiellement et forme un nuage de protection dont la température augmente au fur et à mesure que ce dernier se rapproche du coeur du plasma. Il se crée alors un « globule » de plasma dérivant dans le gradient du champ magnétique, jusqu'à ce que la matière injectée s'homogénéise avec celle du plasma principal.

Lors de la mise en oeuvre d'une telle solution, l'efficacité s'est révélée être proche de 100%. De plus, comme mentionné ci-dessus, il a été observé que le globule de plasma formé, dérivant dans le gradient de champ magnétique, augmentait encore davantage la pénétration de cette matière vers le coeur du plasma.

Cependant, malgré la bonne efficacité de l'alimentation procurée par cette seconde solution d'injection, la complexité de sa mise en oeuvre se traduit directement par des coûts 10 à 100 fois plus importants que pour la première solution.

Par ailleurs, il est en outre précisé que dans les installations de fusion thermonucléaire actuelles, les combustibles majoritairement utilisés sont l'hydrogène et/ou le deutérium. Or si la mise en oeuvre peu coûteuse de ces gaz reste envisageable dans des solutions d'efficacité relativement faible, il n'en est pas de même lorsque le combustible utilisé est largement plus onéreux, tel que le tritium, qui est considéré comme le principal combustible des installations futures. De plus, le tritium étant difficile à mettre sous forme solide en raison de sa radioactivité et de la présence d'éléments He³, la seconde solution d'injection présentée précédemment n'est pas non plus totalement satisfaisante dans la perspective de l'utilisation d'un tel combustible dans des installations de fusion thermonucléaire.

### EXPOSÉ DE L'INVENTION

L'invention a donc pour but de proposer un dispositif de mise en oeuvre simple, donc peu coûteuse, permettant d'injecter rapidement du gaz à très forte pression, avec un flux instantané intense, tout en garantissant une très bonne étanchéité entre les pulses de gaz.

Ce dispositif trouve notamment une application pour une installation d'étude des plasmas de fusion thermonucléaire. Par ailleurs, il est précisé que ce dispositif peut s'appliquer de façon générale à toute injection de gaz dans une enceinte fermée comme une chambre de combustion de moteurs, ou réacteurs physico-chimiques.

Pour ce faire, l'invention a pour objet un dispositif d'injection d'un flux de gaz supersonique pulsé, notamment mais non-exclusivement destiné à alimenter une installation d'étude des plasmas de fusion thermonucléaire en combustible. Selon l'invention, le dispositif d'injection comporte une première chambre à l'intérieur de laquelle le gaz à injecter se trouve sous pression de part et d'autre d'un piston libre, le dispositif comprenant des moyens de mise en mouvement de ce piston libre, connectés à la première chambre et susceptibles de provoquer une propulsion du piston libre. De plus, le dispositif comporte une tuyère supersonique d'éjection du gaz apte à communiquer avec la première chambre par l'intermédiaire d'une ouverture pratiquée dans cette première chambre, ainsi qu'une soupape obturant l'ouverture et apte à être actionnée par percussion du piston libre.

Avantageusement, le dispositif d'injection selon l'invention est de conception simple, tout à fait adaptée à une installation d'étude des plasmas de fusion thermonucléaire.

Ainsi, le principe de l'invention reposant sur une injection de bouffées de gaz rapides et concentrées, cette caractéristique spécifique permet de conserver une simplicité de mise en oeuvre similaire à celle rencontrée dans la première solution de l'art antérieur, lorsque l'injection de gaz était réalisée à l'aide de vannes piézoélectriques. Par ailleurs, l'agencement particulier proposé autorise également une injection de gaz dont les caractéristiques se rapprochent fortement de celles relatives à la seconde solution décrite dans l'art antérieur, lorsque l'injection du combustible s'effectuait sous forme de glaçons.

Le dispositif selon l'invention peut alors avantageusement atteindre une efficacité de l'ordre de 50 à 60%, donc bien supérieure à celle obtenue avec la première solution de l'art antérieur, tout en étant conçu de sorte que son coût soit au moins dix fois inférieur à celui de la seconde solution de l'art antérieur.

Les tests réalisés sur l'installation « Tore Supra » ont d'autre part démontré que le dispositif d'injection présenté autorisait une injection d'un pulse de gaz d'une quantité de l'ordre de 0,5 Pa.m³ pendant environ 0,5 ms à une fréquence de fonctionnement au moins égale à 10 Hertz, ces valeurs permettant d'assurer une alimentation en combustible de l'installation très satisfaisante.

Préférentiellement, les moyens de mise en mouvement du piston libre sont susceptibles de créer une différence de pression dans le gaz à injecter, de part et d'autre du piston libre. Pour ce faire, on peut prévoir que ces moyens de mise en mouvement comprennent une seconde chambre à l'intérieur de laquelle le gaz à injecter se trouve sous pression de part et d'autre d'un piston commandé.

Dans un tel cas, la seconde chambre peut alors être connectée à la première chambre par l'intermédiaire d'un premier conduit de raccordement faisant communiquer une première portion d'extrémité de la première chambre avec une seconde portion d'extrémité de la seconde chambre, et par l'intermédiaire d'un second conduit de raccordement faisant communiquer une première portion d'extrémité de la seconde chambre avec une seconde portion d'extrémité de la première chambre. Ainsi, un mouvement du piston commandé dans la direction allant de la seconde vers la première portion d'extrémité de la seconde chambre provoque une propulsion du piston libre dans la direction allant de la seconde vers la première portion d'extrémité de la première chambre, et inversement.

Avec un tel agencement, il est alors possible de prévoir que le piston commandé est actionné par un ensemble magnétique, comportant deux bobines espacées et montées de façon à entourer la seconde chambre du dispositif.

De plus, la première portion d'extrémité de la seconde chambre comporte préférentiellement une entrée de gaz, destinée à être raccordée à une alimentation en gaz à injecter. A cet égard, de façon à assurer un remplissage en gaz à injecter de l'ensemble du dispositif, la seconde chambre peut être munie d'un by-pass réglable autorisant la circulation du gaz à injecter entre les première et seconde portions d'extrémité de cette seconde chambre. Il est en outre possible d'assurer cette fonction en prévoyant qu'au moins l'un des éléments pris parmi le piston libre et le piston commandé est logé dans sa chambre respective de façon à former un passage étroit pour le gaz, entre les deux compartiments de la chambre qu'il définit.

Dans un mode de réalisation préféré du dispositif selon l'invention, la première chambre est obturée au niveau de sa seconde portion d'extrémité à l'aide d'un bloc de fermeture comprenant un premier et un second orifice, le premier orifice coopérant avec le premier conduit de raccordement et débouchant dans un canal adjacent à la première chambre communiquant avec la première portion d'extrémité de cette première chambre, le second orifice coopérant avec le second conduit de raccordement et débouchant directement dans la première chambre du dispositif.

Par ailleurs, la soupape obturant l'ouverture pratiquée dans la première chambre du dispositif peut disposer d'une tête traversant cette ouverture et faisant saillie dans une enceinte d'injection prévue dans la première portion d'extrémité, l'enceinte d'injection étant apte à être fermée par le piston libre. Pour ce faire, le piston libre est avantageusement conçu de manière à comporter un élément externe ainsi qu'un élément interne coulissant dans l'élément externe, l'élément interne étant destiné à percuter la tête de la soupape afin de l'actionner, et l'élément externe étant destiné à fermer l'enceinte d'injection.

Dans ce mode de réalisation préféré, la soupape est mise sous tension par l'intermédiaire d'un ressort, de façon à écraser un joint d'étanchéité situé autour de l'ouverture pratiquée dans la première chambre du dispositif. Le ressort est alors situé dans un logement réalisé d'une seule pièce avec la première chambre, ce même logement ainsi que la chambre étant sensiblement cylindriques et coaxiaux, et séparés par l'ouverture pratiquée dans la première chambre du dispositif. D'autre part, le logement du ressort dispose d'un orifice faisant communiquer un espace intérieur de ce logement avec la tuyère supersonique du dispositif.

Enfin, notons que les moyens de mise en mouvement du piston libre sont aptes à provoquer une ouverture de la soupape pendant une durée d'environ 2 ms, et une éjection de gaz de la tuyère supersonique d'une quantité de l'ordre de 0,5 Pa.m³ pendant une durée d'environ 0,5 ms, à une fréquence de fonctionnement d'au moins 10 Hz.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue schématique d'un dispositif d'injection d'un flux de gaz supersonique pulsé, schématisant le principe de l'invention ;
- la figure 2 représente une vue en coupe d'un dispositif d'injection d'un flux de gaz supersonique pulsé, selon un mode de réalisation préféré de la présente invention ;
- les figures 3a à 3g schématisent le fonctionnement du dispositif d'injection représenté sur la figure 2 ;
- la figure 4 est un graphe illustrant l'évolution de différents paramètres du dispositif d'injection représenté sur la figure 2, lorsque ce dernier est en fonctionnement ; et
- la figure 5 est une vue partielle et schématique en coupe d'une installation d'étude des plasmas de fusion thermonucléaire, sur laquelle est monté le dispositif d'injection représenté sur la figure 2 à 4.

### EXPOSÉ DÉTAILLÉ DE MODES DE RÉALISATION PRÉFÉRÉS

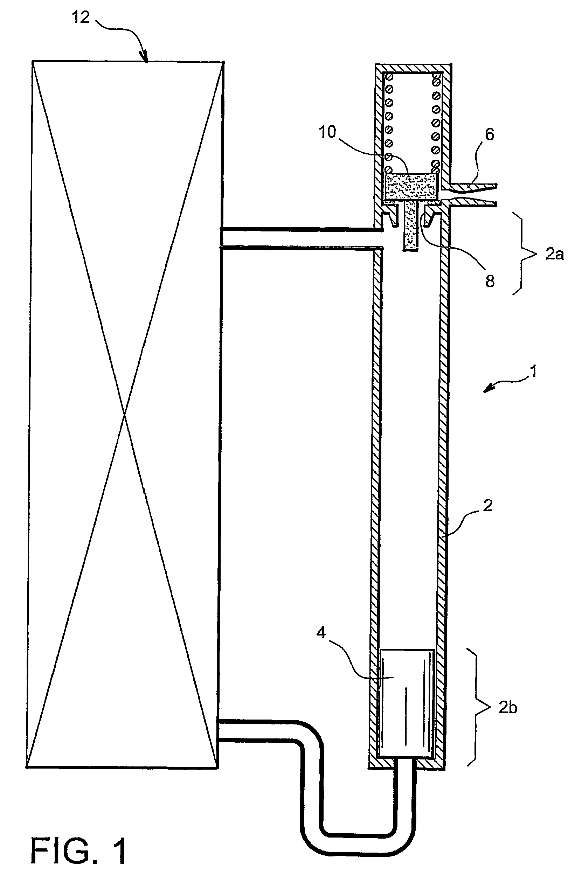

En référence à la figure 1, il est représenté un dispositif d'injection 1 d'un flux de gaz supersonique pulsé, schématisant le principe de l'invention.

Le dispositif d'injection 1 comporte une première chambre 2, à l'intérieur de laquelle se trouve un piston libre 4, le gaz à injecter étant sous pression de part et d'autre de ce piston libre 4.

Le dispositif 1 comporte en outre une tuyère supersonique 6, à travers laquelle le gaz est susceptible d'être éjecté, afin d'engendrer un flux supersonique pulsé.

Comme on peut le voir sur la figure 1, la première chambre 2 est apte à communiquer avec la tuyère supersonique 6, notamment à l'aide d'une ouverture 8 pratiquée dans cette première chambre 2 du dispositif 1, et obturée par une soupape 10.

Afin de générer le flux de gaz supersonique pulsé, le dispositif 1 est muni de moyens de mise en mouvement 12 du piston libre 4, connectés à la première chambre 2 et susceptibles de provoquer une propulsion du piston libre 4 dans cette première chambre 2 du dispositif d'injection 1.

Ainsi, avec une telle configuration, le piston libre 4 en mouvement dans la première chambre 2 est apte à percuter la soupape 10, de manière à libérer l'ouverture 8 pendant une durée déterminée, et autoriser un passage du gaz à injecter entre la première chambre 2 et la tuyère supersonique 6.

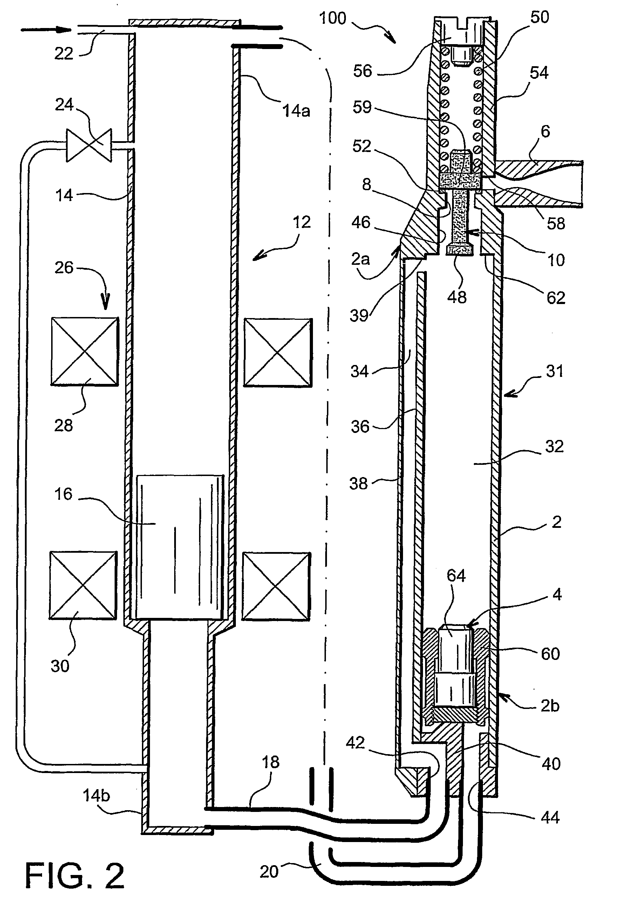

La figure 2 représente un dispositif d'injection 100 d'un flux de gaz supersonique pulsé, selon un mode de réalisation préféré de la présente invention.

Comme mentionné précédemment dans le principe de l'invention, le dispositif d'injection 100 comporte une première chambre 2, un piston libre 4 susceptible d'être mis en mouvement à l'intérieur de la première chambre 2, une tuyère supersonique 6, une ouverture 8 dans la première chambre 2, ainsi qu'une soupape 10 obturant cette ouverture.

Dans ce mode de réalisation préféré de la présente invention, les moyens de mise en mouvement 12 du piston libre 4 comportent une seconde chambre 14, à l'intérieur de laquelle se trouve un piston commandé 16, le gaz à injecter étant sous pression de part et d'autre de ce piston libre 16.

Afin d'assurer la connexion entre la première chambre 2 et la seconde chambre 14 du dispositif d'injection 100, ce dernier comprend un premier conduit de raccordement 18 faisant communiquer une première portion d'extrémité 2a de la première chambre 2 avec une seconde portion d'extrémité 14b de la seconde chambre 14. De plus, le dispositif 100 est également muni d'un second conduit de raccordement 20 faisant communiquer une première portion d'extrémité 14a de la seconde chambre 14 avec une seconde portion d'extrémité 2b de la première chambre 2.

Les conduits de raccordement 18 et 20 sont par conséquent également remplis de gaz à injecter, et agencés de sorte qu'un mouvement du piston commandé 16 dans la direction allant de la seconde portion d'extrémité 14b vers la première portion d'extrémité 14a de la seconde chambre 2 engendre une pression/dépression de part et d'autre du piston libre 4, provoquant ainsi une propulsion de ce piston libre 4 dans la direction allant de la seconde portion d'extrémité 2b vers la première portion d'extrémité 2a de la première chambre 2. De façon analogue, on peut noter qu'un mouvement du piston commandé 16 dans la direction allant de la première portion d'extrémité 14a vers la seconde portion d'extrémité 14b de la seconde chambre 2 engendre une propulsion du piston libre 4 dans la direction allant de la première portion d'extrémité 2a vers la seconde portion d'extrémité 2b de la première chambre 2.

Il est par ailleurs précisé que les premières portions d'extrémité 2a et 14a des première et seconde chambres 2 et 4 correspondent préférentiellement à des portions d'extrémité hautes, tandis que les secondes portions d'extrémité 2b et 14b des première et seconde chambres 2 et 4 correspondent à des portions d'extrémité basses. Ainsi, en raison de la position sensiblement verticale des première et seconde chambres 2 et 14, lorsque le dispositif d'injection 100 est dans une position de repos telle que celle représentée sur la figure 2, la pression du gaz à injecter est sensiblement identique dans tous les éléments constitutifs du dispositif 100, permettant alors aux pistons libre et commandé 4 et 16 de se situer respectivement, par gravité, au niveau des secondes portions d'extrémité basses 2b et 14b des chambres 2 et 14.

Le dispositif d'injection 100 est connecté à une alimentation en gaz (non représentée), cette alimentation étant susceptible d'introduire le gaz à injecter dans le dispositif 100, sous une pression par exemple comprise entre 3 et 10 bars, et de préférence sous une pression d'environ 5 bars. Pour ce faire, on peut prévoir que l'alimentation est raccordée à une entrée de gaz 22, communiquant avec la première portion d'extrémité 14a de la seconde chambre 14.

D'autre part, afin d'assurer la présence et une pression sensiblement identique du gaz dans tous les éléments constitutifs du dispositif 100, la seconde chambre 14 est reliée à un by-pass réglable 22, autorisant la circulation du gaz entre la première portion d'extrémité 14a et la seconde portion d'extrémité 14b, donc de part et d'autre du piston commandé 16. De cette façon, après chaque actionnement de la soupape 10 entraînant la libération de l'ouverture 8 pratiquée dans la première chambre 2, la quantité de gaz s'étant échappée par la tuyère supersonique 6 peut être réintroduite dans le dispositif 100 depuis l'entrée de gaz 22, et être uniformément répartie dans ce dispositif à l'aide du by-pass réglable 24, permettant le rééquilibrage des pressions à une échelle de temps proche de la seconde.

Une solution additionnelle ou alternative à celle du by-pass 22 pourrait consister à assurer la présence d'une fuite au niveau des pistons libre et commandé 4 et 16, en prévoyant un passage entre ces pistons et leurs chambres 2 et 14 associées. Notons que ce passage peut tout simplement prendre la forme d'un jeu entre ces différents éléments.

Plusieurs techniques de pilotage du piston commandé 16 sont envisageables afin de provoquer le déplacement du gaz à injecter dans les éléments constitutifs du dispositif d'injection 100, ainsi que la pression/dépression au niveau du piston libre 4.

A cet égard, on peut citer la technique de compression d'un soufflet par un vérin hydraulique. Cependant, dans le mode de réalisation préféré décrit de la présente invention, c'est un ensemble magnétique 26 qui permet le déplacement du piston commandé 16 à l'intérieur de la seconde chambre 14. Notons que cette solution est particulièrement avantageuse dans la mesure où elle permet de limiter fortement l'inventaire en gaz à injecter, par rapport aux autres solutions proposées.

Toujours en référence à la figure 2, on voit que l'ensemble magnétique 26 comporte deux bobines 28 et 30 espacées verticalement et entourant la seconde chambre 14 du dispositif 100. Cet agencement spécifique, du type lentille magnétique, autorise un mouvement rapide du piston commandé 16 dans sa chambre associée 14, ainsi que la possibilité d'obtenir une force de percussion importante du piston libre 4 sur la soupape 10 du dispositif 100.

Typiquement, les bobines 28 et 30 sont composées par 800 tours d'un fil de 2,5 mm de diamètre, et alimentés par un courant de l'ordre de 30 à 40 A. La résistance est d'environ 1 Ω et la self-inductance de l'ordre de 0,1 H. Des mesures réalisées ont alors permis de constater que le champ produit au niveau du piston commandé 16 était d'environ 25 mT/A.

A titre indicatif, il faut noter que la création de courant dans les bobines 28 et 30 demande une puissance importante, avec en particulier une tension initiale élevée pour pouvoir lutter contre la self-inductance de ces bobines. Une tension de 500 V et une intensité de 40 A peuvent alors être des valeurs assurant une alimentation électrique initiale adéquate des bobines 28 et 30. De plus, pour piloter ces bobines, il est possible d'utiliser une méthode simple et économique visant à réaliser un circuit RLC résonant entre l'inductance des bobines 28 et 30 et un banc de capacités (non représenté), par exemple de 530 µF. Ce dernier est préalablement chargé avant d'être connecté à l'une des bobines 28,30 par un thyristor rapide, puis connecté à l'autre bobine au moment de l'inversion du courant. De cette manière, il devient donc relativement aisé de créer un mouvement de va-et-vient du piston commandé 16 dans sa seconde chambre 14 associée, à l'aide d'une alimentation électrique fonctionnant pendant des périodes d'environ 100 ms, à une tension comprise entre 100 et 150 V et une intensité comprise entre 30 et 40 A.

Dans ce mode de réalisation préféré de la présente invention, la première chambre 2 est réalisée dans un bloc de matière 31, de préférence en acier inoxydable, de façon à définir un espace 32 sensiblement cylindrique de section circulaire, dans lequel le piston libre 4 est susceptible d'être propulsé. Un canal adjacent 34 à la première chambre 2 est réalisé en prévoyant une gorge 36 au niveau d'une paroi latérale du bloc de matière 31, cette gorge 36 étant fermée par une plaque 38. Comme on peut le voir sur la figure 2, le canal adjacent 34 communique avec la première portion d'extrémité 2a correspondant à la portion d'extrémité haute de la première chambre 2, par l'intermédiaire d'une ouverture latérale 39. De plus, le canal adjacent 34 longe verticalement cette première chambre 2 afin de s'étendre jusqu'au niveau de la seconde portion d'extrémité 2b, correspondant à la portion d'extrémité basse de cette même chambre 2.

La première chambre 2 et le canal adjacent 34 sont obturés, au niveau de leurs portions d'extrémité basses, par un bloc de fermeture 40.

Lorsque le bloc de fermeture 40 est assemblé sur le bloc de matière 31, un premier orifice 42 débouche dans le canal adjacent 34 et coopère avec le premier conduit de raccordement 18, de manière à permettre une circulation du gaz à injecter entre la première portion d'extrémité 2a de la première chambre 2, et la seconde portion d'extrémité 14b de la seconde chambre 14. Par ailleurs, le bloc de fermeture 40 est également muni d'un second orifice 44, coopérant avec le second conduit de raccordement 20 et débouchant directement dans la seconde portion d'extrémité 2b de la première chambre 2, de manière à permettre une circulation du gaz à injecter entre cette dernière et la première portion d'extrémité 14a de la seconde chambre 14.

Notons que le bloc de fermeture 40 peut être assemblé par vissage sur le bloc de matière 31, puis être soudé à ce dernier afin de procurer une étanchéité parfaite.

Dans la première portion d'extrémité 2a de la première chambre 2, il est prévu une enceinte d'injection 46, notamment délimitée en partie haute par l'ouverture 8 obturée par la soupape 10 du dispositif 100. Comme cela sera décrit plus précisément ci-dessous, l'enceinte d'injection 46 peut également être délimitée en partie basse par le piston libre 4, lorsque celui-ci vient percuter la soupape 10. Le volume de cette enceinte d'injection 46 est bien entendu déterminé en fonction de la quantité de gaz que l'on désire éjecter de la tuyère supersonique 6 à chaque impulsion. Il peut par exemple être de l'ordre de 0,65 cm³.

La soupape 10, obturant l'ouverture 8 pratiquée dans la première chambre 2 du dispositif 100, dispose d'une tête 48 traversant cette ouverture 8, et faisant saillie à l'intérieur de l'enceinte d'injection 46. De plus, cette soupape 10 est mise sous tension à l'aide d'un ressort 50 lui permettant d'écraser un joint d'étanchéité 52, prévu autour de l'ouverture 8 pratiquée dans la première chambre 2. Le joint d'étanchéité 52 est préférentiellement du type joint plastique fluoré, apte à maintenir l'étanchéité de la première chambre 2 jusqu'à une température avoisinant 250°C. Pour sa part, le ressort 50 est par exemple adapté de sorte que l'ouverture maximale de la soupape 10 nécessite une compression du ressort de l'ordre de 25 daN.

Dans ce mode de réalisation préféré de la présente invention, le ressort 50 est placé dans un logement 54 où il est précontraint de quelques millimètres, par exemple de 5 mm, à l'aide d'une vis 56 située à une extrémité haute du logement 54. Ce logement 54 est réalisé dans le même bloc de matière 31 que celui dans lequel sont réalisés la première chambre 2 et le canal adjacent 34 du dispositif 100. Ainsi, le logement 54 est sensiblement cylindrique de section circulaire, coaxial à la première chambre 2, et séparée de cette dernière par l'intermédiaire de l'ouverture 8 qui est également coaxiale à ces deux éléments 2 et 54.

A proximité de l'ouverture 8 de la première chambre 2, le logement 54 du ressort 50 est muni d'un orifice latéral 58, faisant communiquer un espace intérieur du logement 54 avec la tuyère supersonique 6 du dispositif 100. Lorsque le dispositif d'injection 100 est dans un état de repos, la soupape 10 dispose d'une portion de fermeture 59 dont la paroi inférieure obture l'ouverture 8, et dont la paroi latérale obture totalement l'orifice latéral 58 prévu dans le logement 54.

La tuyère supersonique 6 est assemblée extérieurement sur le logement 54, par exemple par soudage, afin que lors d'un actionnement de la soupape 10, le gaz sous pression situé dans l'enceinte d'injection 46 puisse s'échapper par l'ouverture 8 et l'orifice latéral 58 progressivement libérés, et être éjecté de la tuyère supersonique 6 du dispositif 100.

Notons que dans le mode de réalisation préféré représenté sur la figure 2, la tuyère supersonique 6 est assemblée sur le logement 54 du ressort 50 de façon à être sensiblement perpendiculaire à ce dernier. Bien entendu, sans sortir du cadre de l'invention, la tuyère supersonique 6 pourrait être disposée différemment, par exemple selon une inclinaison spécifique déterminée en fonction de l'application du dispositif d'injection 100.

La tuyère supersonique 6 montée sur le logement 54 est préférentiellement du type tuyère de Laval supersonique destiné à limiter la dispersion axiale du gaz, et adaptée en fonction des besoins rencontrés. En effet, il est possible de dimensionner les sections d'entrée et de sortie de la tuyère 6 afin d'obtenir un nombre de Mach donné. A titre d'exemple, une section d'entrée de 0,8 mm² et une section de sortie de 0,5 cm² permet d'obtenir un nombre de Mach égal à quatre, avec une pression de fonctionnement du dispositif d'injection 100 pouvant atteindre au moins 10 bars. La valeur des sections de la tuyère 6 peut ainsi être modifiée afin d'obtenir un nombre de Mach plus important, sans sortir du cadre de l'invention. Toutefois, notons que le dimensionnement de la tuyère supersonique 6 doit également tenir compte du domaine d'application du dispositif d'injection 100, dans le but de présenter un encombrement final compatible avec cette application.

Le piston libre 4, destiné à être mis en mouvement dans la première chambre 2, est de préférence composé de deux éléments. Parmi ces deux éléments, on compte tout d'abord un élément externe 60 en bronze, ce matériau assurant un glissement relativement facile du piston libre 4 à l'intérieur de la première chambre 2. Lorsque le piston libre 4 est propulsé vers la première portion d'extrémité 2a de la chambre 2, son déplacement en translation est stoppé par un épaulement 62, pratiqué dans le bloc de matériau unique 31 dans lequel est réalisée la première chambre 2. Par ailleurs, dans cette position d'arrêt contre l'épaulement 62, l'élément externe 60 obture l'ouverture latérale 39 communiquant avec le canal adjacent 34, de manière à fermer, en partie basse, l'enceinte d'injection 46 prévue dans la première portion d'extrémité 2a de la première chambre 2.

D'autre part, le piston libre 4 comporte également un élément interne 64, agencé de façon à coulisser par rapport à l'élément externe 60. La fonction principale de cet élément interne 64 est de percuter la soupape 10, lorsque le piston libre 4 a été mis en mouvement dans la première chambre 2, et légèrement avant que l'élément interne 60 ait été stoppé en translation par l'épaulement 62. Pour assurer un bon fonctionnement du dispositif d'injection 100, il est préférable que le rebond de l'élément interne 64 du piston libre 4, engendré lors de la percussion de la soupape 6, soit limité au maximum. Ainsi, il est possible de prévoir un revêtement supérieur en cuivre ou en aluminium sur cet élément interne 64, afin de provoquer un rebond faible ainsi qu'une forte étanchéité de l'enceinte d'injection 46.

A titre d'exemple non limitatif et en combinaison avec les indications déjà mentionnées ci-dessus, le dispositif d'injection 100 d'un flux de gaz supersonique pulsé, selon le mode de réalisation préféré représenté sur la figure 2, peut être conçu en respectant les paramètres suivants :
- diamètre extérieur de l'élément externe 60 du piston libre 4 : 16 mm ;
- masse totale du piston libre 4 : 40 g ;
- course du piston libre 4 dans la première chambre 2 : 85 mm ;
- volume de la première chambre 2 : 17 cm³ ;
- diamètre intérieur de chacun des conduits de raccordement 18 et 20 : 6 mm ;
- longueur de chacun des conduits de raccordement 18 et 20 : 5 m ;
- volume de chacun des conduits de raccordement 18 et 20 : 140 cm³ ;
- diamètre extérieur du piston commandé 16 : 32 mm ;
- longueur du piston commandé 16 : 50 mm ;
- masse du piston commandé 16 : 320 g ;
- course du piston commandé 16 dans la seconde chambre 14 : 20 à 40 mm ;
- volume de la seconde chambre 14 : 80 cm³.

A l'aide d'un tel dispositif d'injection 100, des tests réalisés sur une installation d'étude des plasmas de fusion thermonucléaire ont démontré qu'il était possible d'injecter un pulse de gaz d'une quantité de l'ordre de 0,2 à 0,5 Pa.m³, pendant environ 0,4 à 0,5 ms à jusqu'à une fréquence de fonctionnement au moins égale à 10 Hertz, et ce en prévoyant une ouverture de la soupape 10 pendant une période comprise entre 1 et 3 ms. Comme mentionné précédemment, il est rappelé que l'unité « Pa.m³ » de quantité de matière employée et communément utilisée pour les plasmas de fusion, correspond à la quantité de matière contenue dans un mètre cube à une pression de un Pascal, mesurée à la température ambiante de 20°C.

Ainsi, le dispositif d'injection 100 peut autoriser un débit de pulses de gaz rapides et concentrés d'environ 400 Pa.m³/s.

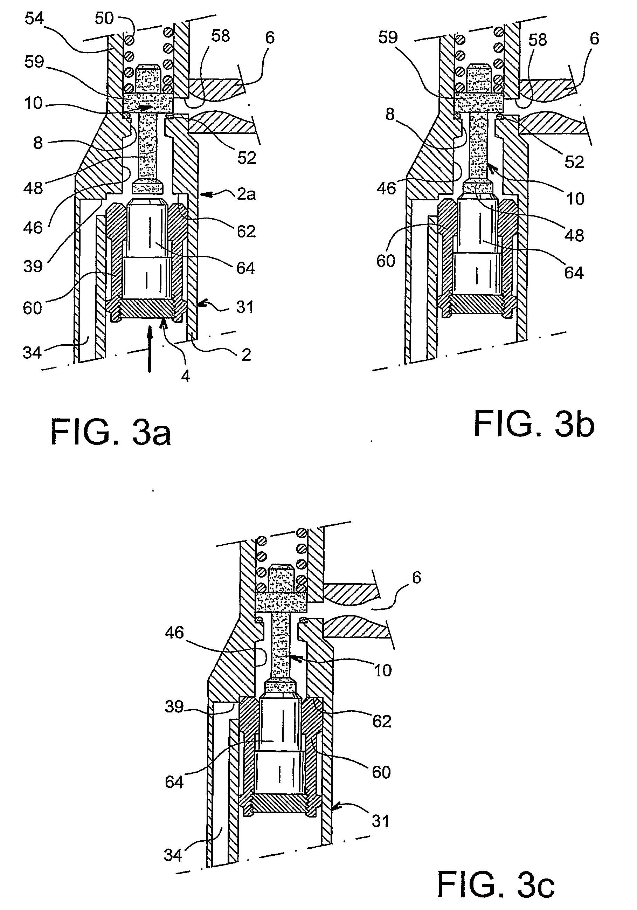

Les figures 3a à 3g schématisent le fonctionnement du dispositif d'injection 100, lorsque le piston commandé 16 (non représenté sur ces figures) est animé d'un mouvement allant dans la direction de la seconde portion d'extrémité 14b vers la première portion d'extrémité 14a de la seconde chambre 14.

Comme cela est symbolisé par la flèche de la figure 3a, le mouvement du piston commandé 16 décrit ci-dessus provoque, à l'aide des conduits de raccordement 18 et 20, une propulsion du piston libre 4 dans la direction allant de la seconde portion d'extrémité 2b vers la première portion d'extrémité 2a de la première chambre 2. Préférentiellement, le piston libre 4, propulsé en raison du phénomène de pression/dépression se produisant de part et d'autre de celui-ci, arrive au niveau de la première portion d'extrémité 2a de la première chambre 2 avec une vitesse comprise entre environ 5 et 8 m/s.

L'élément interne 64 du piston libre 4 vient alors percuter la tête 48 de la soupape 10, comme cela est représenté sur la figure 3b. La portion de fermeture 59 de la soupape 10 est donc décollée du joint d'étanchéité 52, et un passage relativement étroit permet au gaz sous pression contenu dans l'enceinte d'injection 46 de commencer à s'échapper en direction de la tuyère supersonique 6, par l'ouverture 8 et l'orifice latéral 58 se libérant progressivement.

Sur la figure 3c, on voit qu'après le début de la percussion de la soupape 10 par l'élément interne 64, l'élément externe 60 du piston libre 4 est toujours animé d'un mouvement de translation en direction de la première portion d'extrémité 2a de la première chambre 2, jusqu'à ce qu'il soit stoppé par l'épaulement 62, prévu à cet effet dans le bloc de matière 31. Dans cet état, l'ouverture latérale 39 entre la première chambre 2 et le canal adjacent 34 est obturée par la paroi latérale extérieure de l'élément externe 60, de sorte que l'enceinte d'injection 46 soit fermée au niveau de sa partie basse. L'enceinte d'injection 46 est alors isolée de façon étanche du reste de la première chambre 2, et le gaz sous pression se vide donc de cette enceinte 46, en direction de la tuyère supersonique 6. De plus, il est à noter que la dépression créée dans l'enceinte d'injection 46 maintient également de façon étanche l'élément externe 60 contre l'épaulement 62.

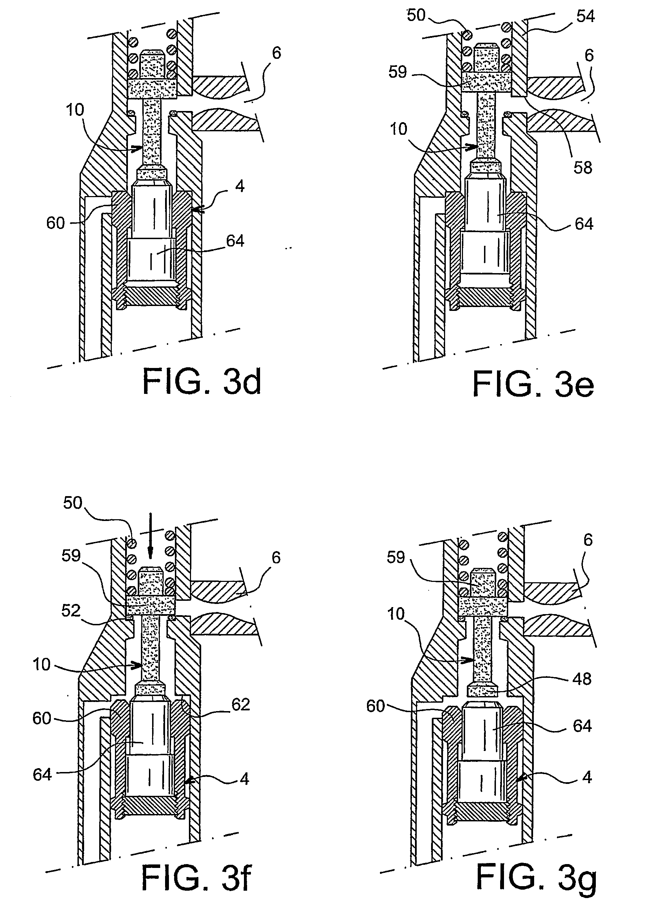

Ensuite, comme cela est représenté sur la figure 3d, l'élément interne 64 coulisse dans l'élément externe 60 du piston libre 4, afin de provoquer une ouverture encore plus importante de la soupape 10, et donc un débit plus conséquent de gaz sous pression en direction de la tuyère supersonique 6. Il est précisé que ce débit de gaz est ensuite relativement rapidement contrôlé par la section d'entrée de cette tuyère 6.

La figure 3e symbolise l'état dans lequel la soupape 10 est actionnée au maximum. Dans un tel état, l'orifice latéral 58 prévu dans le logement 54 du ressort 50 est totalement dégagé, alors que celui-ci était jusqu'à présent au moins partiellement obturé par la paroi latérale de la portion de fermeture 59 de la soupape 10. A ce titre, comme mentionné précédemment, le ressort 50 est comprimé dans son logement 54 par une force de l'ordre de 25 daN. Il est de plus précisé que dans cet état, l'éjection du pulse de gaz depuis la tuyère supersonique 6 est terminée.

Par l'action du ressort de compression 50, la soupape 10 vient à nouveau obturer l'ouverture 8 pratiquée dans la première chambre 2. Comme ceci est visible sur la figure 3f, le replacement de la soupape 10 entraîne, par contact, un mouvement des éléments externe et interne 60 et 64 du piston libre 4 en direction de la seconde portion d'extrémité 2b, engendrant le décollement de l'élément externe 60 de l'épaulement 62. La portion de fermeture 59 de la soupape 10 retrouve ensuite le contact avec le joint d'étanchéité 52 entourant l'ouverture 8, 1 à 3 ms après l'avoir quitté, jusqu'à l'écraser totalement comme cela est représenté sur la figure 3g. Sur cette dernière figure où l'on peut considérer que les pressions du gaz à injecter sont sensiblement identiques de part et d'autre du piston libre 4, on voit que le contact entre la tête 48 de la soupape 10 et l'élément interne 64 du piston libre 4 n'existe plus. Cependant, l'inversion du courant dans les bobines 28 et 30 de l'ensemble magnétique 26 permet d'engendrer une propulsion du piston libre 4 dans la direction de la seconde portion d'extrémité 2b, de sorte qu'il retrouve sa position de repos au fond de la première chambre 2 du dispositif d'injection 100.

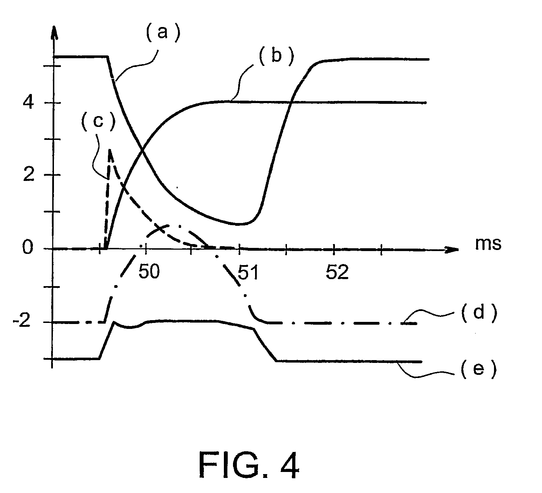

L'évolution de différents paramètres du dispositif 100 lors d'une injection d'un pulse de gaz supersonique est également illustrée sur le graphe de la figure 4, tracé suite à la réalisation d'essais effectués sur un dispositif d'injection 100 disposant de caractéristiques techniques similaires à celles exposées précédemment.

Sur ce graphe, l'axe des abscisses est un axe de temps en millisecondes, tandis que l'axe des ordonnées peut différer en fonction de la nature de chacune des courbes, parmi lesquelles :
- la courbe (a) représente la pression, en bars, à l'intérieur de l'enceinte d'injection 46 ;
- la courbe (b) représente la quantité de gaz éjecté de la tuyère supersonique 6, en Pa.m³×10 ;
- la courbe (c) représente le débit de gaz sortant de la tuyère supersonique 6, en unité arbitraire ;
- la courbe (d) représente la course de la soupape 10, en mm ;
- la courbe (e) représente la course de l'élément externe 60 du piston libre 4, en mm.

Sur ce graphe, la courbe (e) montre qu'après une durée légèrement inférieure à 50 ms suivant la mise sous tension des bobines 28 et 30 de l'ensemble magnétique 26, l'élément externe 60 vient en butée contre l'épaulement 62, et rebondit légèrement contre ce dernier avant de conserver cette position pendant quasiment l'intégralité de l'ouverture de la soupape 10. En référence à la courbe (d), on voit que la soupape 10 est actionnée avant que l'élément externe 60 vienne en butée contre l'épaulement 62, en raison de sa percussion par l'élément interne 64 du piston libre 4, comme cela est décrit ci-dessus et représenté sur la figure 3b.

Dès le début de l'ouverture de la soupape 10, la valeur du débit de gaz éjecté de la tuyère 6 devient maximum avant même que l'élément externe 60 n'ait été stoppé par l'épaulement 62, puis décroît sensiblement de manière exponentielle'comme le montre la courbe (c). De la même façon, l'ouverture de la soupape 10 entraîne une chute brutale de la pression à l'intérieur de l'enceinte d'injection 46, comme cela est visible sur la courbe (a).

Sur la courbe (b), on s'aperçoit que tout au long de la phase ascendante de la soupape 10, la quantité de gaz éjecté de la tuyère 6 croît au cours du temps pour atteindre une quantité totale de l'ordre de 0,4 Pa.m³, environ 0,5 ms après le début de l'actionnement de la soupape 10, cette dernière restant pourtant ouverte pendant une période proche de 2 ms. En d'autres termes, il a été constaté que durant la descente de la soupape 10 en direction de l'ouverture 8, la quantité de gaz éjecté de la tuyère supersonique 6 était quasiment nulle.

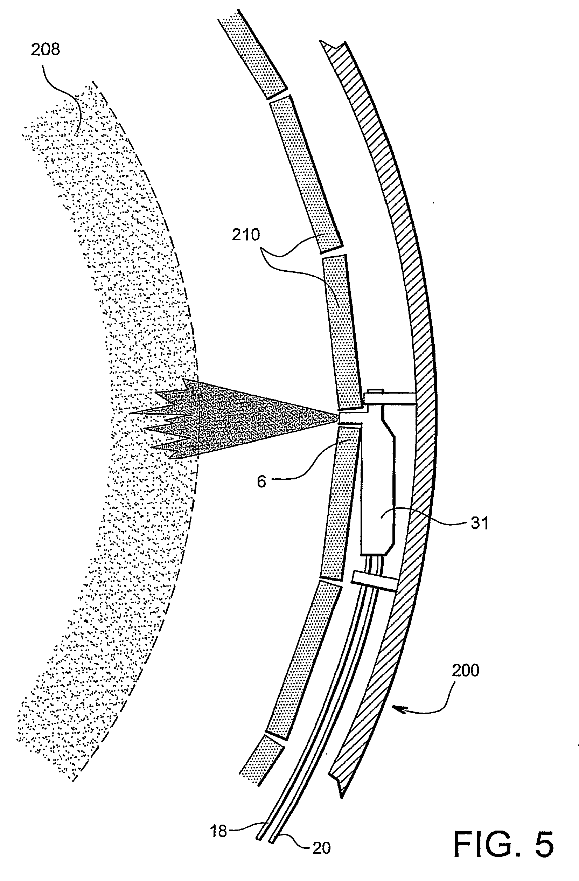

En référence à la figure 5, le dispositif d'injection 100 est installé dans une enceinte à vide 200 en forme de tore, similaire à celle présente dans l'installation de fusion thermonucléaire « Tore Supra » sur laquelle l'invention a été développée.

Sur cette figure 5, on voit que le bloc de matière 31, dans lequel est notamment formée la première chambre 2 contenant le piston libre 4 du dispositif d'injection 100, est monté fixement sur la face interne de l'enceinte 200. De plus, la tuyère supersonique 6 du dispositif 100 est agencée de façon à se situer entre des tuiles de recouvrement 210, afin que les pulses de gaz éjectés de cette tuyère 6 puissent rejoindre le plasma 208.

Le bloc de matière 31 est fixé de manière à ce que la première chambre 2 dispose d'une position sensiblement verticale, telle que celle représentée sur les figures 1, 2 et 3a à 3g, toujours dans le but que le piston libre 4 se positionne par gravité au fond de la première chambre 2, lorsque le dispositif d'injection 100 est dans un état de repos.

Pour assurer le fonctionnement du dispositif d'injection 100, les conduits de raccordement 18 et 20, connectés à la première chambre 2, sortent de l'enceinte à vide 200 pour être raccordés aux moyens de mise en mouvement 12 du piston libre 4, tels que ceux décrits précédemment. Ainsi, la seconde chambre 14 et l'ensemble magnétique 26 peuvent être situés à distance de l'enceinte à vide 200, de sorte que leur fonctionnement n'est en aucun cas altéré par la présence du plasma 208. D'autre part, comme décrit ci-dessus, la seconde chambre 14 est préférentiellement disposée de façon verticale à distance de l'enceinte à vide 200, afin que le piston commandé 16 se situe par gravité au niveau de la seconde portion d'extrémité 14b, lorsque le dispositif 100 est dans un état de repos.

En retenant une telle solution technique pour l'alimentation en combustible du plasma 208, on s'aperçoit que le dispositif d'injection 100 est tout à fait adapté pour supporter les contraintes environnantes de l'enceinte à vide 200.

En effet, la simplicité de conception et le mode de fonctionnement du dispositif 100 permettent à ce dernier d'être placé à quelques 10 cm du plasma 208, dans un champ magnétique intense d'environ 6 T et à une température de l'ordre de 200 à 250°C, tout en supportant la puissance rayonnée par le plasma 208, pouvant atteindre jusqu'à 1 MW/m³. De plus, il est en outre indiqué que le dispositif d'injection 100 proposé est compatible avec l'ultravide régnant dans l'enceinte 200, cet ultravide engendrant une pression résiduelle d'environ 10⁻⁵ Pa, nécessaire pour obtenir une bonne qualité du plasma 208.

Bien entendu, le nombre de dispositifs d'injection 100 sur l'enceinte à vide 200 est déterminé en fonction des besoins rencontrés, et particulièrement en fonction du volume du plasma 208. A titre d'exemple, il peut être de trois.

Bien entendu, diverses modifications peuvent être apportées par l'homme du métier au dispositif d'injection 1 et 100 qui viennent d'être décrits, uniquement à titre d'exemples non limitatifs.

L'invention est néanmoins définie par les revendications.

## Revendications

1. Dispositif d'injection (1,100) d'un flux de gaz supersonique pulsé, comportant une première chambre (2) à l'intérieur de laquelle le gaz à injecter se trouve sous pression de part et d'autre d'un piston libre (4), le dispositif (1,100) comprenant des moyens de mise en mouvement (12) de ce piston libre, connectés à ladite première chambre (2) et susceptibles de provoquer une propulsion du piston libre (4), ledit dispositif (1,100) comportant en outre une tuyère supersonique (6) d'éjection du gaz apte à communiquer avec la première chambre (2) par l'intermédiaire d'une ouverture (8) pratiquée dans cette première chambre (2), et une soupape (10) obturant ladite ouverture (8) et apte à être actionnée par percussion du piston libre (4).

2. Dispositif d'injection (100) selon la revendication 1, dans lequel les moyens de mise en mouvement (12) du piston libre sont susceptibles de créer une différence de pression dans le gaz à injecter, de part et d'autre du piston libre (4).

3. Dispositif d'injection (100) selon la revendication 1 ou la revendication 2, dans lequel les moyens de mise en mouvement (12) du piston libre comprennent une seconde chambre (14) à l'intérieur de laquelle le gaz à injecter se trouve sous pression de part et d'autre d'un piston commandé (16).

4. Dispositif d'injection (100) selon la revendication 3, dans lequel ladite seconde chambre (14) est connectée à ladite première chambre (2) par l'intermédiaire d'un premier conduit de raccordement (18) faisant communiquer une première portion d'extrémité (2a) de la première chambre (2) avec une seconde portion d'extrémité (14b) de la seconde chambre (14), et par l'intermédiaire d'un second conduit de raccordement (20) faisant communiquer une première portion d'extrémité (14a) de la seconde chambre (14) avec une seconde portion d'extrémité (2b) de la première chambre (2), de sorte qu'un mouvement du piston commandé (16) dans la direction allant de la seconde (14b) vers la première portion d'extrémité (14a) de la seconde chambre (14) provoque une propulsion du piston libre (4) dans la direction allant de la seconde (2b) vers la première portion d'extrémité (2a) de la première chambre (2), et inversement.

5. Dispositif d'injection (100) selon la revendication 4, dans lequel les secondes portions d'extrémité (2b,14b) des première et seconde chambres (2,14) correspondent respectivement à une portion d'extrémité basse des première et seconde chambres (2,14) du dispositif (100).

6. Dispositif d'injection (100) selon la revendication 4 ou la revendication 5, dans lequel la première portion d'extrémité (14a) de la seconde chambre (14) du dispositif (100) comporte une entrée de gaz (22), destinée à être raccordée à une alimentation en gaz à injecter.

7. Dispositif d'injection (100) selon l'une quelconque des revendications 3 à 6, dans lequel le piston commandé (16) est susceptible d'être actionné par un ensemble magnétique (26), comportant deux bobines espacées (28,30) et montées de façon à entourer ladite seconde chambre (14) du dispositif (100).

8. Dispositif d'injection (100) selon l'une quelconque des revendications 4 à 7, dans lequel la seconde chambre (14) est munie d'un by-pass réglable (24) autorisant la circulation du gaz à injecter entre les première et seconde portions d'extrémité (14a,14b) de cette seconde chambre (14).

9. Dispositif d'injection (100) selon l'une quelconque des revendications 4 à 8, dans lequel au moins l'un des éléments pris parmi le piston libre (4) et le piston commandé (16) est logé dans sa chambre associée (2,14), de façon à former un passage étroit pour le gaz, entre les deux compartiments de la chambre qu'il définit.

10. Dispositif d'injection (100) selon l'une quelconque des revendications 4 à 9, dans lequel ladite première chambre (2) est obturée au niveau de sa seconde portion d'extrémité (2b) à l'aide d'un bloc de fermeture (40) comprenant un premier (42) et un second orifices (44), ledit premier orifice (42) coopérant avec le premier conduit de raccordement (18) et débouchant dans un canal (34) adjacent à la première chambre (2) communiquant avec la première portion d'extrémité (2a) de cette première chambre (2), ledit second orifice (44) coopérant avec le second conduit de raccordement (20) et débouchant directement dans la première chambre (2) du dispositif (100).

11. Dispositif d'injection (100) selon l'une quelconque des revendications 4 à 10, dans lequel la soupape (10) obturant l'ouverture (8) pratiquée dans la première chambre (2) du dispositif (100) dispose d'une tête (48) traversant cette ouverture (8) et faisant saillie dans une enceinte d'injection (46) prévue dans la première portion d'extrémité (2a), ladite enceinte d'injection (46) étant apte à être fermée par le piston libre (4).

12. Dispositif d'injection (100) selon la revendication 11, dans lequel le piston libre (4) comporte un élément externe (60) ainsi qu'un élément interne (64) coulissant dans l'élément externe (60), l'élément interne (64) étant destiné à percuter la tête (48) de ladite soupape (10) afin de l'actionner, et l'élément externe (60) étant destiné à fermer ladite enceinte d'injection (46).

13. Dispositif d'injection (100) selon l'une quelconque des revendications précédentes, dans lequel ladite soupape (10) est mise sous tension par l'intermédiaire d'un ressort (50), de manière à écraser un joint d'étanchéité (52) situé autour de ladite ouverture (8) pratiquée dans la première chambre (2) du dispositif (100).

14. Dispositif d'injection (100) selon la revendication 13, dans lequel le ressort (50) est situé dans un logement (54) réalisé d'une seule pièce avec la première chambre (2), ledit logement (54) et la première chambre (2) étant sensiblement cylindriques et coaxiaux et séparés par ladite ouverture (8) pratiquée dans la première chambre (2) du dispositif (100).

15. Dispositif d'injection (100) selon la revendication 14, dans lequel le logement (54) du ressort (50) dispose d'un orifice (58) faisant communiquer un espace intérieur de ce logement (54) avec ladite tuyère supersonique (6) du dispositif (100).

16. Dispositif d'injection (1,100) selon l'une quelconque des revendications précédentes, dans lequel le gaz à injecter est introduit dans le dispositif (100) sous une pression comprise entre environ 3 et 10 bars.

17. Dispositif d'injection (1,100) selon l'une quelconque des revendications précédentes, dans lequel les moyens de mise en mouvement (12) du piston libre sont aptes à provoquer une ouverture de la soupape pendant une durée d'environ 2 ms et une éjection de gaz de la tuyère supersonique (6) d'une quantité de l'ordre de 0,5 Pa.m³ pendant une durée d'environ 0,5 ms, à une fréquence de fonctionnement d'au moins 10 Hz.

## Claims

1. A device (1, 100) for injecting a pulsed supersonic gas flux, including a First chamber (2) inside which the gas to be injected is found under pressure on either side of a free piston (4), the device (1, 100) comprising means (120 for setting this free piston into motion, connected to said first chamber (2) and capable of causing propulsion of the free piston (4), said device (1, 100) further including a supersonic nozzle (6) for ejecting the gas, capable of communicating with the first chamber (2) via an aperture (8) provided in this first chamber (2), and a valve (10) closing up said aperture (8) actuatable by percussion of the free piston (4).

2. The injection device (100) according to claim 1, wherein the means (12) for setting the free piston into motion are able to create a pressure difference in the gas to be injected on either side of the free piston (4).

3. The injection device (100) according to claim 1 or claim 2, wherein the means (12) for setting the free piston into motion comprise a second chamber (14) inside which the gas to be injected is found under pressure on either side of a controlled piston (16).

4. The injection device (100) according to claim 3, wherein said second chamber (14) is connected to said first chamber (2) via a first connection conduit (18) having a first end portion (2a) of the first chamber (2) communicate with a second end portion (14b) of the second chamber (14), and via a second connection conduit (20) having a first end portion (14a) of the second chamber (14) communicate with a second end portion (2b) of the first chamber (2), so that a movement of the controlled piston (16) in the direction from the second (14b) to the first end portion (14a) of the second chamber (14) causes the free piston (4) to be propelled in the direction from the second (2b) to the first end portion (2a) of the first chamber (2), and vice versa.

5. The injection device (100) according to claim 4, wherein the second end portions (2b,14b) of the first and second chambers (2,14) correspond to a low end portion of the first and second chambers (2,14) of the device (100), respectively.

6. The injection device (100) according to claim 4 or claim 5, wherein the first end portion (14a) of the second chamber (14) of the device (100) includes a gas inlet (22) intended to be connected to a supply of gas to be injected.

7. The injection device (100) according to any of claims 3 to 6, wherein the controlled piston (16) is able to be actuated by a magnetic assembly (26), including two spaced out coils (28,30) and mounted so as to encircle said second chamber (14) of the device (100).

8. The injection device (100) according to any of claims 4 to 7, wherein the second chamber (14) is provided with an adjustable by-pass (24) allowing the flow of the gas to be injected between the first and second end portions (14a,14b) of this second chamber (14).

9. The injection device (100) according to any of claims 4 to 8, wherein at least one of the components taken from the free piston (4) and the controlled piston (16) is housed in its associated chamber (2,14), in order to form a narrow passage for the gas, between both compartments of the chamber which it defines.

10. The injection device (100) according to any of claims 4 to 9, wherein said first chamber (2) is closed up at its second end portion (2b) by means of a closing block (40) comprising a first (42) and a second port(44), said first port (42) cooperating with the first connection conduit (18) and opening up into a channel (34) adjacent to the first chamber (2) communicating with the first end portion (2a) of this first chamber (2), said second port (44) cooperating with the second connection conduit (20) and directly opening up into the first chamber (2) of the device (100).

11. The injection device (100) according to any of claims 4 to 10, wherein the valve (10) closing up the aperture (8) provided in the first chamber (2) of the device (100) has a head (48) passing through this aperture (8) and protruding in an injection enclosure (46) provided in the first end portion (2a), said injection enclosure (46) being able to be closed by the free piston (4).

12. The injection device (100) according to claim 11, wherein the free piston (4) includes an external component (60) as well as an internal component (64) sliding in the external component (60), the internal component (64) being intended to strike the head (48) of said valve (10) in order to actuate it, and the external component (60) being intended for closing said injection enclosure (46).

13. The injection device (100) according to any of the preceding claims, wherein said valve (10) is tensioned via a spring (50), so as to crush a gasket seal (52) located around said aperture (8) provided in the first chamber (2) of the device (100).

14. The injection device (100) according to claim 13, wherein the spring (50) is located in a housing (54) made as one single part with the first chamber (2), said housing (54) and the first chamber (2) being substantially cylindrical and coaxial and separated by said aperture (8) provided in the first chamber (2) of the device (100).

15. The injection device (100) according to claim 14, wherein the housing (54) of the spring (50) has a port (58), having an interior space of this housing (54) communicate with said supersonic nozzle (6) of the device (100).

16. The injection device (1,100) according to any of the preceding claims, wherein the gas to be injected is introduced into the device (100) at a pressure between about 3 and 10 bars.

17. The injection device (1,100) according to any of the preceding claims, wherein the means (12) for setting the free piston into motion are able to cause opening of the valve for a period of about 2 ms, and ejection of gas from the supersonic nozzle (6) in an amount of the order of 0.5 Pa.m³ for a period of about 0.5 ms, at an operating frequency of at least 10 Hz.

## Patentansprüche

1. Injektionsvorrichtung (1, 100) eines gepulsten Überschallgasstroms, eine erste Kammer (2) umfassend, in deren Innern sich das unter Druck stehende Injektionsgas beiderseits eines freien Kolbens (4) befindet, wobei die Vorrichtung (1, 100) Antriebseinrichtungen (12) dieses freien Kolbens umfasst, die mit der genannten ersten Kammer (2) verbunden und fähig sind, den freien Kolben (4) anzutreiben, und die Vorrichtung (1, 100) außerdem eine Überschalldüse (6) zum Ausstoßen des Gases umfasst, die durch eine in der ersten Kammer (2) vorgesehene Öffnung (8) mit dieser ersten Kammer (2) verbunden ist, und ein Ventil (10) zum Verschließen der Öffnung (8) umfasst, das durch ein Aufschlagen des freien Kolbens (4) geöffnet werden kann.

2. Injektionsvorrichtung (100) nach Anspruch 1, bei der die Antriebseinrichtungen (12) des freien Kolbens fähig sind, in dem Injektionsgas einen Druckunterschied bezüglich der beiden Seiten des freien Kolbens (4) zu erzeugen.

3. Injektionsvorrichtung (100) nach Anspruch 1 oder Anspruch 2, bei dem die Antriebseinrichtungen (12) des freien Kolbens eine zweite Kammer (14) umfassen, in deren Innern das Injektionsgas auf beiden Seiten eines gesteuerten Kolbens (16) unter Druck steht.

4. Injektionsvorrichtung (100) nach Anspruch 3, bei der die genannte zweite Kammer (14) mit der ersten Kammer (2) kommuniziert durch eine erste Verbindungsleitung (18), die einen ersten Endteil (2a) der ersten Kammer (2) mit einem zweiten Endteil (14b) der zweiten Kammer (14) verbindet, und durch eine zweite Verbindungsleitung (20), die einen ersten Endteil (14a) der zweiten Kammer (14) mit einem zweiten Endteil (2b) der ersten Kammer (2) verbindet.

5. Injektionsvorrichtung (100) nach Anspruch 4, bei der die zweiten Endteile (2b, 14b) der ersten und der zweiten Kammer (2, 14) jeweils einem unteren Endteil der ersten und der zweiten Kammer (2, 14) der Vorrichtung (100) entsprechen.

6. Injektionsvorrichtung (100) nach Anspruch 4 oder Anspruch 5, bei der der erste Endteil (14a) der zweiten Kammer (14) der Vorrichtung (100) einen Gaseingang (22) für den Anschluss an eine Injektionsgasversorgung umfasst.

7. Injektionsvorrichtung (100) nach einem der Ansprüche 3 bis 6, bei der der gesteuerte Kolben (16) durch ein magnetisches System (26) betätigt werden kann, das zwei Spulen (28, 30) umfasst, die beabstandet sind und die genannte zweite Kammer (14) der Vorrichtung (100) umgeben.

8. Injektionsvorrichtung (100) nach einem der Ansprüche 4 bis 7, bei der die zweite Kammer (14) einen regelbaren Bypass (24) umfasst, der das Fließen von Injektionsgas zwischen dem ersten und dem zweiten Endteil (14a, 14b) dieser zweiten Kammer (14) ermöglicht.

9. Injektionsvorrichtung (100) nach einem der Ansprüche 4 bis 8, bei der wenigstens einer der Kolben, entweder der freie Kolben (4) oder der gesteuerte Kolben (16) in seiner Kammer so zwischen den beiden durch ihn abgegrenzten Teilen der Kammer sitzt, dass er eine schmale Passage für das Gas bildet bzw. freilässt.

10. Injektionsvorrichtung (100) nach einem der Ansprüche 4 bis 9, bei der die genannte erste Kammer (2) auf Höhe ihres zweiten Endteils (2b) mittels eines Verschlussblocks (40) verschlossen ist, der eine erste (42) und eine zweite Öffnung (44) umfasst, wobei die erste Öffnung (42) mit der ersten Verbindungsleitung (18) kooperiert und in einem der ersten Kammer (2) benachbarten Kanal (34) mündet, der mit dem ersten Endteil (2a) dieser ersten Kammer (2) kommuniziert, und die genannte zweite Öffnung (44) mit der zweiten Verbindungsleitung (20) kooperiert und direkt in der ersten Kammer (2) der Vorrichtung (100) mündet.

11. Injektionsvorrichtung (100) nach einem der Ansprüche 4 bis 10, bei der das die in der ersten Kammer (2) der Vorrichtung (100) vorgesehene Öffnung (8) verschließende Ventil (10) einen Kopf (48) umfasst, der diese Öffnung (8) durchquert und in einen in dem ersten Endteil (2a) vorgesehenen Injektionsraum (46) hineinragt, wobei dieser Injektionsraum (46) durch den freien Kolben (4) verschlossen werden kann.

12. Injektionsvorrichtung (100) nach Anspruch 11, bei der der freie Kolben (4) ein Außenelement (60) sowie ein in diesem Außenelement (60) verschiebbares Innenelement (64) umfasst, wobei das Innenelement (64) dazu bestimmt ist, auf den Kopf (48) des genannten Ventils (10) zu schlagen, um ihn zu betätigen, und das Außenelement (60) dazu bestimmt ist, den genannten Injektionsraum (46) zu verschließen.

13. Injektionsvorrichtung (100) nach einem der vorangehenden Ansprüche, bei der das genannte Ventil (10) mittels einer Feder (50) so gespannt wird, dass es eine Dichtung (52) quetscht, die die genannte Öffnung (8) umgibt, die in der ersten Kammer (2) der Vorrichtung (100) vorgesehen ist.

14. Injektionsvorrichtung (100) nach Anspruch 13, bei der die Feder (50) sich in einem Sitz (54) befindet, der aus einem Stück mit der ersten Kammer (2) ist, wobei dieser Sitz (54) und die erste Kammer (2) im Wesentlichen zylindrisch und koaxial sind und durch die genannte Öffnung (8) getrennt sind, die in der ersten Kammer (2) der Vorrichtung (100) vorgesehen ist.

15. Injektionsvorrichtung (100) nach Anspruch 14, bei der der Sitz (54) der Feder (50) eine Öffnung (58) hat, die einen Innenraum dieses Sitzes (54) mit der genannten Überschalldüse (6) der Vorrichtung (100) verbindet.

16. Injektionsvorrichtung (1, 100) nach einem der vorangehenden Ansprüche, bei der das Injektionsgas mit einem Druck zwischen ungefähr 3 und 10 bar in die Vorrichtung (100) eingespeist wird.

17. Injektionsvorrichtung (1, 100) nach einem der vorangehenden Ansprüche, bei der die Antriebseinrichtungen (12) des freien Kolbens fähig sind, eine Ventilöffnung mit einer Dauer von ungefähr 2 ms und einen Gasausstoß der Überschalldüse (6) mit einer Menge von ungefähr 0,5 Pa.m³ während einer Dauer von ungefähr 0,5 ms zu realisieren, mit einer Betriebsfrequenz von wenigstens 10 Hz.
